# EUROPÄISCHE PATENTANMELDUNG

(11) **EP 3 412 438 A1**
(43) Veröffentlichungstag der Anmeldung: **12.12.2018**
(21) Anmeldenummer: 17174568.0
(22) Anmeldetag: 06.06.2017
(51) Int. Cl.: B29C 70/54

(54) **SYSTEM ZUM HERSTELLEN EINER PULTRUSIONSPLANKE FÜR EIN ROTORBLATT EINER WINDENERGIEANLAGE, VERFAHREN UND SCHLEIFVORRICHTUNG**

(71) Anmelder: Nordex Energy GmbH, 22419 Hamburg (DE)
(72) Erfinder: Lipka, Thomas, 18055 Rostock (DE)
(74) Vertreter: Epping - Hermann - Fischer

(57) **Zusammenfassung**

Die Erfindung betrifft ein System (1) zum Herstellen einer Pultrusionsplanke (19) für ein Rotorblatt (104) einer Windenergieanlage (100), das System (1) aufweisend:
- eine Förderstation (2) zum Fördern eines Pultrusionsplankenhalbzeugs (4) und
- eine Schleifvorrichtung (9), die bezüglich der Förderrichtung (3) hinter der Förderstation (2) angeordnet ist; wobei
- die Schleifvorrichtung (9) einen Konturkörper (11) aufweist, der eine vorgegebene Kontur (12) aufweist, die an eine Schäftung (20, 21) eines Endes (22, 23) einer herzustellenden Pultrusionsplanke (19) angepasst ist; und
- die Schleifvorrichtung (9) ein rotierbares Schleifband (15) aufweist, welches zumindest entlang der vorgegebenen Kontur (12) um den Konturkörper (11) geführt ist; und
- zumindest der Konturkörper (11) mit dem Schleifband (15) entlang einer Verfahrrichtung (18) bewegbar ist, so dass abhängig von der vorgegebenen Kontur (12) Material des Pultrusionsplankenhalbzeugs (4) zum Herstellen der Schäftung (20, 21) abgetragen werden kann.

Die Erfindung betrifft des Weiteren ein Verfahren und eine Schleifvorrichtung (9).

## Beschreibung

Die Erfindung betrifft ein System zum Herstellen einer Pultrusionsplanke für ein Rotorblatt einer Windenergieanlage. Darüber hinaus werden ein Verfahren zum Herstellen einer Pultrusionsplanke sowie eine Schleifvorrichtung beschrieben.

Rotorblätter von Windenergieanalagen weisen typischerweise eine äußere Hülle oder Schale auf, die aus einem oder mehreren Verbundwerkstoffen oder Verbundlaminaten hergestellt ist. Derartige Materialien ermöglichen es trotz einer Leichtbauweise den Rotorblättern strukturelle, mechanische Eigenschaften zu verleihen.

Um etwa eine Steifigkeit, eine Stärke, einen Knickwiderstand und/oder eine Länge der Rotorblätter zu erhöhen, werden beispielsweise Strukturelemente gefertigt, die die Rotorblätter über einen Großteil der Rotorblattlänge von der Rotorblattwurzel bis zur Rotorblattspitze durchziehen. Anders ausgedrückt folgen solche Strukturelemente beispielsweise einer Kontur eines Rotorblatts oder einer Rotorblatthalbschale in Längsrichtung. Bei solchen Strukturelementen handelt es sich beispielsweise um Rotorblattgurte. Diese Strukturelemente bestehen typischerweise aus parallel ausgerichteten Fasersträngen, etwa Glas- oder Kohlenstofffasern, die in einen Matrixwerkstoff, etwa Harz, eingebettet sind. Üblicherweise werden die Strukturelemente schichtartig aufgebaut, wobei entweder trockene Fasergelege mit dem Matrixwerkstoff versehen werden oder bereits vorgefertigte Lagen von in den Matrixwerkstoff eingebetteter Fasern (als sogenannte Prepregs bezeichnet) übereinander angeordnet und anschließend verbunden werden. Eine weitere Möglichkeit zur Fertigung der Strukturelemente ist die Verwendung vorgefertigter Planken aus einem Faserverbundwerkstoff. Diese Planken sind vor der Weiterverarbeitung bereits ausgehärtet und können beispielsweise als Halbzeuge in einem Pultrusionsverfahren hergestellt werden.

Eine Möglichkeit der Herstellung solcher Strukturelemente ist in der US 2012/0027609 A1 beschrieben, wobei ein pultrudierter Stab von einer Rolle abgerollt und zu kleineren Einzelstäben abgeschnitten wird. Letztere werden dann in bestimmter Anzahl zu einer Schicht übereinander angeordnet und verbunden.

Für ein Strukturelement müssen beispielsweise mehrerer solcher Planken in die entsprechende Länge gebracht, zu einem Verbund gestapelt und stoffschlüssig miteinander verbunden werden. In Dickenrichtung für einen Hauptgurt sind eine oder mehrere Pultrusionsplanken notwendig.

Die Pultrusionsplanken werden in der Regel an ihren Enden mit einer Schäftung versehen, um den am Übergang in Dickenrichtung von Planke zu Planke auftretenden Steifigkeitssprung zu minimieren. Diese Schäftungen können mechanisch hergestellt werden. Die WO 2015/067279 A1 beschreibt ein Verfahren zum Herstellen einer solchen Schäftung, bei dem mittels einer Schleiftrommel eine Planke vorbestimmter Länge von einem sogenanntem Masterstrip abgeteilt und die Enden der Planken mit einer Schäftung versehen werden.

Eine Aufgabe, die der Erfindung zugrunde liegt, ist es, ein Konzept für die Herstellung von Pultrusionsplanken anzugeben, welches zu einer effizienten Herstellung beiträgt.

Gemäß einem ersten Aspekt wird ein System zum Herstellen einer Pultrusionsplanke für ein Rotorblatt einer Windenergieanlage offenbart. Das System weist eine Förderstation zum Fördern eines Pultrusionsplankenhalbzeugs entlang einer Förderrichtung auf. Das System weist eine Schleifvorrichtung auf, die bezüglich der Förderrichtung hinter der Förderstation angeordnet ist. Die Schleifvorrichtung weist einen Konturkörper auf, der auf einer dem Pultrusionsplankenhalbzeug zugeordneten Seite eine vorgegebene Kontur aufweist, die an eine Schäftung eines Endes einer herzustellenden Pultrusionsplanke angepasst ist. Die Schleifvorrichtung weist ein rotierbares Schleifband auf, welches zumindest entlang der vorgegebenen Kontur um den Konturkörper geführt ist. Der Konturkörper mit dem Schleifband ist entlang einer Verfahrrichtung zumindest teilweise durch eine Dicke des Pultrusionsplankenhalbzeugs bewegbar, so dass abhängig von der vorgegebenen Kontur Material des Pultrusionsplankenhalbzeugs zum Herstellen der Schäftung abgetragen werden kann.

Für die Herstellung einer Pultrusionsplanke wird in einem bestimmungsgemäßen Betrieb des Systems das Ausgangshalbzeug, das Pultrusionsplankenhalbzeug, zu der Schleifvorrichtung gefördert und von letzterer anschließend bearbeitet. Das Fördern erfolgt in einer Förderebene in der Förderrichtung. Anschließend wird durch die Rotation des Schleifbands entlang der vorgegebenen Kontur mechanisch Material abgetragen. Das Material wird beispielsweise in einem vorbestimmten Bearbeitungsbereich oder -abschnitt des Pultrusionsplankenhalbzeugs entfernt.

Das System sieht eine insbesondere hinsichtlich eines Fertigungsprozesses einfache Möglichkeit vor, eine Pultrusionsplanke herzustellen und hinsichtlich einer Endgeometrie zu bearbeiten. Dabei wird ein Ende der entsprechenden, herzustellenden Pultrusionsplanke, etwa das rotorblattwurzelseitige Ende oder das rotorblattspitzenseitige Ende mit einer Schäftung versehen, die der vorgegebenen Kontur (etwa einem Negativ) des Konturkörpers entspricht, beziehungsweise zu dieser korrespondiert. Schäftungen sind grundsätzlich von Vorteil, damit etwa in Dickenrichtung eines Verbundes mehrerer geschichteter Planken Steifigkeitssprünge minimiert werden. Dabei kann es erforderlich sein, die Pultrusionsplanke an ihren beiden Enden jeweils mit einer anderen Schäftung zu versehen, d.h. die Schäftungsverhältnisse an den beiden Enden weichen voneinander ab.

Mittels des Zusammenspiels aus Konturkörper und Schleifband wird auf einfache Art und Weise die Erzeugung einer beliebigen, auch komplexen Schäftungsgeometrie ermöglicht. Der in der Schleifvorrichtung gelagerte Konturkörper ist beispielsweise austauschbar angeordnet, so dass ein anderer Konturkörper mit einer weiteren vorgegebenen Kontur eingesetzt werden kann. So können einfach unterschiedliche Schäftungen beziehungsweise Schäftungsverläufe erreicht werden, wobei lediglich der Konturkörper ausgetauscht werden muss. Zudem kann das Austauschen auch während des Herstellungsprozesses erfolgen, etwa während eines Vorschubes beziehungsweise Förderns des Plankenhalbzeugs, da kurze Umrüstzeiten möglich sind. Das Austauschen kann automatisiert erfolgen, wobei beispielsweise ein Konturkörpermagazin und eine Austauschvorrichtung vorgesehen sein können, wobei letztere den eingesetzten Konturkörper durch einen weiteren Konturkörper aus dem Konturkörpermagazin ersetzt.

Ein weiterer Vorteil der erfindungsgemäßen Lösung liegt darin, dass der Konturkörper oder die Schleifvorrichtung nur in einer Richtung, etwa der Verfahrrichtung, bewegt werden müssen, um die gewünschte Kontur zu fertigen. Da die Kontur durch den Konturkörper vorgegeben ist, ist es nicht notwendig, diesen oder die Schleifvorrichtung auch in weiteren Richtungen, etwa parallel zur Förderrichtung, zu verfahren. Das Einbringen der Kontur ist lediglich vom Verfahrweg in der Verfahrrichtung abhängig. Dies ermöglicht eine besonders einfache Steuerung des Verfahrens und trägt zur effizienten, kostengünstigen Herstellung bei.

Bei dem Pultrusionsplankenhalbzeug handelt es sich um eine längliche, stab- und/oder plattenförmige Pultrusionsplanke von typischerweise großer Länge, beispielsweise 250 m bis 300 m. Dieses Halbzeug wird beispielsweise von einer Rolle (englisch coil) abgerollt, etwa mittels der Förderstation. Das Halbzeug weist ein faserverstärktes Material auf. Da es im Pultrusionsprozess ausgehärtet wird, ist es ausreichend steif für die Schleifbearbeitung. Das Halbzeug beziehungsweise eine hergestellte Pultrusionsplanke können auch als Verstärkungselement oder Verstärkungsstrukturelement bezeichnet werden. Das Pultrusionsplankenhalbzeug und damit eine hergestellte Pultrusionsplanke haben eine im Wesentlichen ebene Oberseite und eine im Wesentlichen ebene Unterseite, deren Abstand die Dicke definiert.

Das Schleifband ist mittels eines Antriebs betätigbar und wird um den Konturkörper zumindest im Bereich der Kontur geführt und bewegt. Das Schleifband kann relativ zu dem Konturkörper um diesen rotieren, zumindest im Bereich der vorgegebenen Kontur. Der Antrieb erfolgt beispielsweise elektrisch. Beispielsweise ist das Band um ein oder mehrere Antriebsrollen geführt und gelagert, die das Schleifband in Rotation versetzen. Eine Rotationsachse der Antriebsrollen und somit des Bandes verläuft beispielsweise parallel zu der Förderebene. Mit anderen Worten stellt die vorgegebene Kontur des Konturkörpers ein Negativ der zu erzeugenden Kontur dar. Der Konturkörper kann auch als Stempel bezeichnet werden. Dadurch ist eine einfache Ausgestaltung der Schleifvorrichtung gegeben.

Die vorgegebene Kontur kann auch durch mehrere Konturkörper erreicht werden, die entsprechend angeordnet sind und als Einheit die Kontur vorgegeben, entlang derer Material abgetragen wird. Anders ausgedrückt kann der Konturkörper auch mehrere Einzelkörper aufweisen, die zusammen die vorgegebene Kontur bereitstellen. Mit anderen Worten hat das System eine Vorrichtung zur Konturgebung.

Die Verfahrrichtung des Konturkörpers oder der Schleifvorrichtung ist beispielsweise senkrecht zur Förderrichtung beziehungsweise normal zu der Förderebene. Die Förderebene ist beispielsweise ein Förderband oder eine Förderunterlage, auf welcher das Halbzeug aufliegt und in der Förderrichtung gefördert wird. Mit anderen Worten ist die Förderrichtung beispielsweise eine horizontale Richtung, während die Verfahrrichtung vertikal verläuft. Anders ausgedrückt kann der Konturkörper mit oder ohne Schleifband auf und ab bewegt werden. Zumindest der Konturkörper mit Schleifband ist beispielsweise zwischen einer Startposition, in der kein Eingriff in das Pultrusionsplankenhalbzeug stattfindet, und einer Endposition, in der maximal Material des Pultrusionsplankenhalbzeugs abgetragen werden kann, verfahrbar.

Gemäß einer Ausführungsform ist die vorgegebene Kontur an eine erste Schäftung eines ersten Endes einer herzustellenden Pultrusionsplanke und an eine zweite Schäftung eines zweiten Endes einer weiteren herzustellenden Pultrusionsplanke angepasst. Bei den Enden handelt es sich um die oben erwähnten Enden einer Planke bezüglich der Förderrichtung. Beim Abtragen des Materials mit der Schleifvorrichtung bringt diese eine Schäftung in eine herzustellende Pultrusionsplanke und gleichzeitig eine Schäftung in ein benachbartes Ende des übrigbleibenden Halbzeugs ein, wobei letzteres Ende dann bei Wiederholung des Prozesses ein Ende einer weiteren herzustellenden Planke darstellt. Mit anderen Worten verbleibt, wenn die herzustellende Planke auf eine der oben erwähnten Arten abgetrennt wird, eine Schäftung an einem Ende des zurückbleibenden Halbzeugs, während eine Schäftung in die hergestellte, abgetrennte Planke eingebracht ist. Bei Wiederholung der Prozessschritte wird somit effizient die Herstellung von Planken ermöglicht, die an beiden Enden eine Schäftung mit vorbestimmter Kontur haben. Die erste und zweite Schäftung können gleiche oder verschiedene Schäftungsverhältnisse bzw. Schäftungsgeometrien aufweisen. Beide Schäftungen werden aber in einem Arbeitsschritt hergestellt.

Die vorgegebene Kontur des Konturkörpers hat beispielsweise einen ersten Konturabschnitt, der zu der ersten Schäftung korrespondiert, und einen zweiten Konturabschnitt, der zu der zweiten Schäftung korrespondiert.

Es ergibt sich eine Vielzahl von möglichen Schäftungsgeometrien und -kombinationen, wie exemplarisch nachfolgend aufgeführt. Dies ermöglicht eine hohe Fertigungsflexibilität, so dass Plankenverbunde für eine Vielzahl von Rotorblattausgestaltungen, etwa Geometrien, effizient hergestellt werden können. Dabei kann flexibel Rücksicht auf Steifigkeitssprünge genommen werden.

Beispielsweise ist der Konturkörper so ausgebildet, dass, bezogen auf eine Symmetrieebene normal zu der Förderrichtung, der erste Konturabschnitt symmetrisch zu dem zweiten Konturabschnitt verläuft. Dadurch werden symmetrische Schäftungen an den gegenüberliegenden Enden von Planken ermöglicht. Die Schäftungen sind symmetrisch und haben einen gleichartigen Verlauf, der sich nur hinsichtlich der Richtung bezüglich der Förderrichtung unterscheidet. Beispielsweise ist der Konturkörper symmetrisch aufgebaut. Dies trägt zu einer einfachen Herstellung des Konturkörpers bei und ermöglicht optional eine vereinfachte Montage des Konturkörpers in der Schleifvorrichtung.

Alternativ ist der Konturkörper so ausgebildet, dass der erste Konturabschnitt asymmetrisch zu dem zweiten Konturabschnitt verläuft. Dadurch können unterschiedliche Schäftungen an den beiden Enden einer herzustellenden Planke erreicht werden. Gemäß Ausführungsformen haben die erste und/oder die zweite Schäftung einen linearen und/oder geschwungenen Verlauf.

Die folgenden vorteilhaften Ausgestaltungen von Schäftungen gelten jeweils für asymmetrische und symmetrische Schäftungen.

Beispielsweise kann eine Schäftung eine schiefe Ebene darstellen, wobei der Verlauf des entsprechenden Konturabschnitts unter einem vorbestimmten Winkel bezüglich der Förderrichtung beziehungsweise einer Oberseite/Unterseite des Plankenhalbzeugs verläuft. Dadurch ist eine geradlinige Schäftung bewirkt, die vorzugsweise ein Steigungsverhältnis zwischen 1:20 und 1:100 hat. Eine Schäftung kann auch einen geschwungenen, gekrümmten Verlauf wie einen Radiusverlauf haben. Der Radiusverlauf kann optional über eine Schäftungslänge bezogen auf die Förderrichtung variieren. So können bionische Schäftungen mit beispielsweise logarithmischen Verläufen erreicht werden, wie sie beispielsweise bei Bäumen in Astgabeln oder an Krallen von Raubtieren wie Tigern zu beobachten sind. Radienverläufe sorgen für einen gleichmäßigeren Spannungsverlauf entlang der Randfaser eines belasteten Bauteils. Dadurch können beispielsweise große Tangentialspannungen reduziert oder vermieden werden. Dadurch wird zu einem stabileren Bauteil beigetragen. Auch ist es denkbar, dass eine Schäftung einen Verlauf hat, der einem liegenden "S" angelehnt ist. Mit anderen Worten kann ein Verlauf unterschiedliche Krümmungen, auch eine Kombination von einer negativen und positiven Krümmung, haben.

Gemäß einem zweiten Aspekt wird ein zu dem System korrespondierendes Verfahren beschrieben. Das Verfahren weist beispielsweise ein System gemäß einer der obigen Ausführungsformen auf. Das Verfahren hat die Schritte:
- Bereitstellen eines Pultrusionsplankenhalbzeugs zur Bearbeitung durch eine Schleifvorrichtung,
- Rotieren eines Schleifbandes der Schleifvorrichtung entlang einer vorgegebenen Kontur, die an eine Schäftung eines Endes einer herzustellenden Pultrusionsplanke angepasst ist,
- Bewegen des Schleifbandes entlang einer Verfahrrichtung, und
- Abtragen von Material des Pultrusionsplankenhalbzeugs mittels des Schleifvorrichtung abhängig von der vorgegebenen Kontur zum Herstellen der Schäftung.

Das Verfahren ermöglicht im Wesentlichen die vorgenannten Vorteile und Funktionen. Die Schritte Rotieren und Bewegen können gleichzeitig oder nacheinander erfolgen. Die gemäß dem ersten Aspekt beschriebenen Merkmale und Ausführungsformen gelten analog und können alleine oder in Kombination das Verfahren weiterbilden.

Das Schleifband wird in Richtung des Pultrusionsplankenhalbzeugs und zumindest teilweise durch eine Dicke dessen zum Abtragen von Material bewegt. Beispielsweise ist die Kontur durch einen Konturkörper wie oben beschrieben vorgegeben. Es sind jedoch auch andere Vorrichtungen für die Konturgebung denkbar. Beispielsweise ist eine Schleifvorrichtung analog zu oben vorgesehen. Beispielsweise ist der Konturkörper austauschbar durch einen anderen Konturkörper, etwa mittels eines Magazins und eines Austauschmechanismus. Beispielsweise ist eine Förderstation vorgesehen.

Gemäß einer Ausführungsform wird das Plankenhalbzeug unter Vorschub mittels einer Förderstation bereitgestellt und gefördert, bis eine gewünschte Position des Halbzeugs für die Schleifvorrichtung erreicht ist. Beispielsweise während der Schritte Abtragen und/oder Bewegen findet keine Förderung in der Förderrichtung statt. Mit anderen Worten steht das Halbzeug für den Schleifprozess still und das Fördern ist eingestellt. Zumindest das Schleifband wird zumindest teilweise durch eine Dicke des Pultrusionsplankenhalbzeugs bewegt, so dass Material durch das rotierende Schleifband abgetragen werden kann. Nach dem Abtragen wird beispielsweise die hergestellte, abgelängte Planke in eine Form gelegt. Anschließend wird zumindest das Schleifband wieder nach oben bewegt, also von dem Halbzeug weg, und gleichzeitig oder danach wird das Halbzeug wieder in der Förderrichtung gefördert, so dass eine weitere Planke mit vorbestimmter Länge herstellbar ist.

Gemäß einem dritten Aspekt wird eine Schleifvorrichtung für ein System gemäß dem ersten Aspekt offenbart. Die Schleifvorrichtung hat die oben erwähnten Merkmale und ermöglicht im Wesentlichen die im Zusammenhang erwähnten Vorteile und Funktionen.

Weitere Vorteile und Funktionen sind in den Unteransprüchen und der nachfolgenden, ausführlichen Beschreibung von Ausführungsbeispielen offenbart.

Die Ausführungsbeispiele werden unter Zuhilfenahme der angehängten Figuren ohne Einschränkung der Allgemeinheit nachfolgend beschrieben. Gleichartige oder gleichwirkende Elemente sind figurenübergreifend mit den gleichen Bezugszeichen versehen.

In den Figuren zeigen:
- Figur 1: eine schematische Darstellung einer Windenergieanlage,
- Figuren 2 bis 5: schematische Ansichten eines Systems zum Herstellen einer Pultrusionsplanke gemäß einem Ausführungsbeispiel der Erfindung in vier verschiedenen Betriebszuständen,
- Figuren 6 und 7: schematische Darstellungen zweier Konturkörper gemäß Ausführungsbeispielen der Erfindung,
- Figur 8: eine schematische Darstellung einer mittels dem Konturkörper gemäß Figur 7 hergestellten Pultrusionsplanke,
- Figuren 9 und 10: schematische Darstellungen zweier weiterer Konturkörper gemäß Ausführungsbeispielen der Erfindung,
- Figur 11: eine schematische Darstellung einer mittels dem Konturkörper gemäß Figur 10 hergestellten Pultrusionsplanke,
- Figuren 12 und 13: schematische Darstellungen zweier weiterer Konturkörper gemäß Ausführungsbeispielen der Erfindung, und
- Figur 14: ein schematisches Ablaufdiagramm eines Verfahrens zum Herstellen einer Pultrusionsplanke.

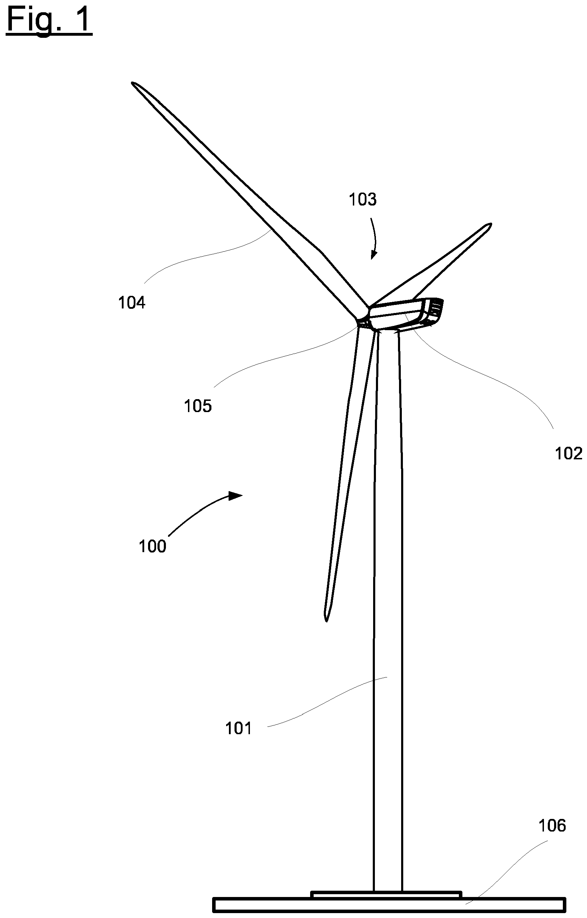

Figur 1 zeigt eine schematische Darstellung einer Windenergieanlage gemäß einem Ausführungsbeispiel. Die Windenergieanlage 100 weist einen Turm 101 auf, der durch ein Fundament 106 auf einem Untergrund befestigt ist. Der Turm 101 kann beispielsweise als Stahlrohrturm, Betonturm oder Fachwerkturm ausgeführt sein.

Am oberen Ende des Turms 101 ist eine Gondel 102 drehbar gelagert. Die Gondel 102 weist beispielsweise einen Generator auf, der über eine Rotorwelle (nicht dargestellt) mit einem Rotor 103 gekoppelt ist. Der Rotor 103 weist ein oder mehrere Rotorblätter 104 auf, die an einer Rotornabe 105 angeordnet sind. Der Rotor 103 wird im Betrieb durch eine Luftströmung in Rotation versetzt. Diese Rotationsbewegung wird über die Rotorwelle und gegebenenfalls ein Getriebe zu dem Generator übertragen, der die kinetische Energie des Rotors in elektrische Energie umwandelt.

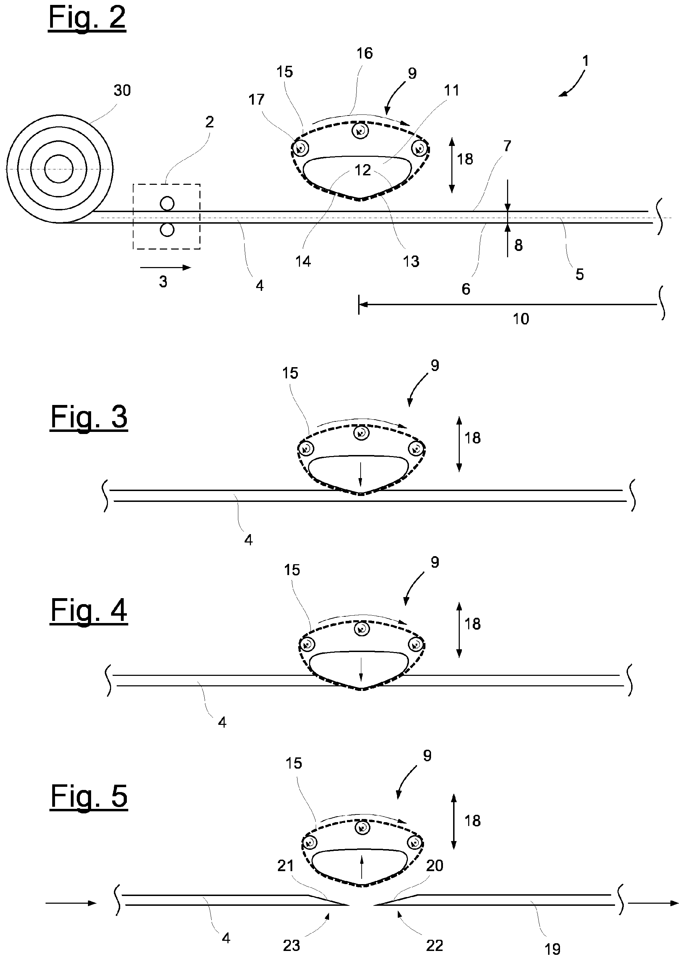

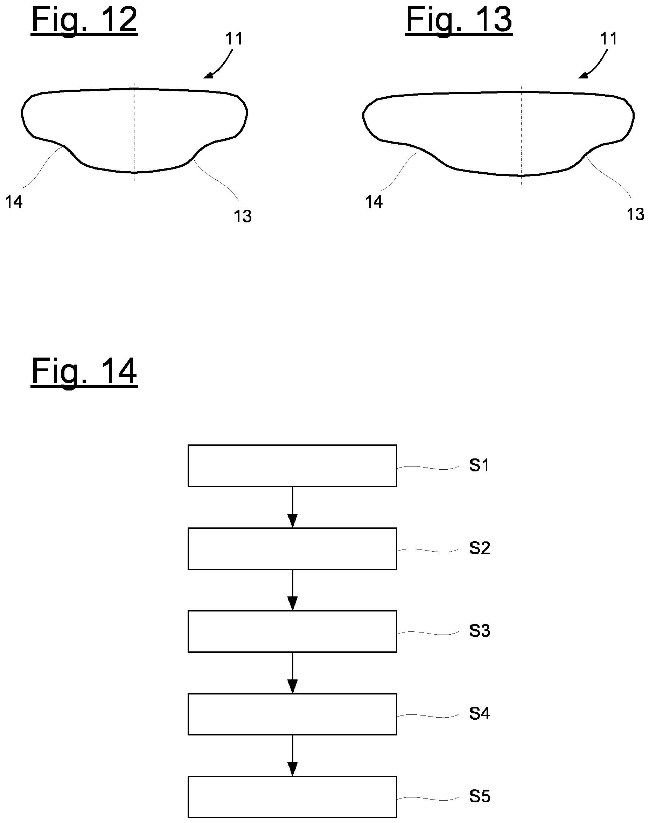

Die Figuren 2 bis 5 zeigen in unterschiedlichen Betriebszuständen ein System 1 gemäß einem Ausführungsbeispiel der Erfindung zum Herstellen von Pultrusionsplanken für ein Rotorblatt, die geschichtet angeordnet und verbunden werden, wie eingangs beschrieben. Das System 1 wird mit Hilfe der Figur 14 beschrieben, die schematisch ein Ablaufdiagramm eines Herstellungsverfahrens mittels des Systems 1 zeigt.

Das System 1 hat eine Förderstation 2, die ein Pultrusionsplankenhalbzeug 4 in einer Förderrichtung 3 fördert, wenn diese betrieben wird. Das Pultrusionsplankenhalbzeug 4 ist als Rolle 30 gelagert und wird von der Förderstation 2 abgerollt und entlang der Förderrichtung 3 in einer Förderebene 5 gefördert. Die Förderebene 5 fällt beispielsweise mit der Mittellinie des Pultrusionsplankenhalbzeugs 4 zusammen. Das Pultrusionsplankenhalbzeug 4 wird beispielsweise auf einer Unterlage, etwa einer Auflagevorrichtung, gefördert oder mittels eines Förderbands bewegt.

Das Pultrusionsplankenhalbzeug 4 hat eine einer Unterseite 6 gegenüberliegende Oberseite 7, die zusammen eine Dicke 8 des Pultrusionsplankenhalbzeugs 4 definieren.

In einem Schritt S1 wird das Pultrusionsplankenhalbzeug 4 mittels der Förderstation 2 zu einer Schleifvorrichtung 9 gefördert (siehe Figur 2). Das Pultrusionsplankenhalbzeug 4 befindet sich somit in einem Vorschub. Das Pultrusionsplankenhalbzeug 4 wird so weit gefördert, bis eine vorbestimmte Position erreicht ist. Mit anderen Worten wird eine vorbestimmte Länge 10 des Pultrusionsplankenhalbzeugs 4 ausgehend von der Schleifvorrichtung 9, etwa einer Mitte, bis zu einem freien Ende des Pultrusionsplankenhalbzeugs bezogen auf die Förderrichtung 3 eingestellt. Anders ausgedrückt steht das Halbzeug 4 hinter der Schleifvorrichtung 9 vorbestimmt über.

Die Schleifvorrichtung 9 hat einen Konturkörper 11, der auf einer dem Pultrusionsplankenhalbzeug 4 zugewandten Seite eine vorgegebene Kontur 12 aufweist. Die vorgegebene Kontur 12 hat zwei Konturabschnitte 13 und 14, die jeweils an eine Schäftung eines Endes von herzustellenden Pultrusionsplanken angepasst sind.

Die Schleifvorrichtung 9 weist weiterhin ein Schleifband 15 auf, welches in einer Rotationsrichtung 16 betrieben wird. Hierzu ist das Schleifband 15 auf ein oder mehreren Antriebsrollen 17 gelagert, die als Antrieb dienen und das Schleifband 15 in Rotation versetzen können. Zusätzlich ist das Schleifband 15 um den Konturkörper 11 zumindest entlang der vorgegebenen Kontur 12 geführt, so dass das Schleifband 15 bei der Rotation diese Kontur 12 abfährt.

Die Schleifvorrichtung 9 kann wie dargestellt in lediglich einer Verfahrrichtung 18 normal zur Förderebene 5 bewegt werden, weitere Verfahrrichtungen sind nicht notwendig. Alternativ wird nur der Konturkörper 11 bewegt, wobei das Schleifband 15 beispielsweise in Verfahrrichtung 18 gedehnt wird bzw. eine bewegliche Lagerung der Antriebsrollen 17 die Bewegung des Konturkörpers 11 zulässt. Die Schleifvorrichtung 9 kann weitere Komponenten, die nicht dargestellt sind, umfassen. Der Antrieb kann auch anders ausgebildet sein, wobei sichergestellt sein muss, dass das Schleifband 15 entlang einer vorgegebenen Kontur, wie der Kontur 12, rotiert werden kann. Der Konturkörper 11 kann durch mehrere Einzelkörper ersetzt sein, die die vorgegebene Kontur 12 bereitstellen.

In dem ersten Schritt S1 (siehe Figur 2) befindet sich die Schleifvorrichtung 9 in einer Startposition über dem Pultrusionsplankenhalbzeug 4, wobei das Schleifband 15 rotieren kann oder noch nicht.

In einem folgenden Schritt S2 (siehe Figur 3) ist der Vorschub des Pultrusionsplankenhalbzeugs 4 eingestellt und dieses steht still. Das Schleifband 15 rotiert nun entlang der Kontur 12 um den Konturkörper 11 und die Schleifvorrichtung 9, zumindest der Konturkörper 11 und das Schleifband 15 mit den Rollen 17, wird abwärts zum Pultrusionsplankenhalbzeug 4 bewegt.

In einem nächsten Schritt S3 wird Material abhängig von einem Verfahrweg entlang der Verfahrrichtung 18 abgetragen. Das Abtragen ist sowohl in Figur 2 und Figur 3 dargestellt, wobei in Figur 3 die Endposition der Schleifvorrichtung 9 bezüglich der Verfahrrichtung 18 dargestellt ist, in welcher das Abtragen beendet ist. Dabei ist zumindest in einem Bereich des Pultrusionsplankenhalbzeugs 4 Material über die gesamte Dicke 8 abgetragen, so dass eine herzustellende Pultrusionsplanke 19 von dem Pultrusionsplankenhalbzeug 4 mit vorbestimmter Länge 10 abgelängt ist.

Die hergestellte Pultrusionsplanke 19 kann direkt oder nach dem nächsten Schritt S4 weiterverarbeitet werden, etwa automatisiert oder manuell in eine Rotorblatt(haupt-)gurtform eingelegt werden.

In dem nächsten Schritt S4 wird die Schleifvorrichtung 9 wieder angehoben und entlang der Verfahrrichtung 18 von dem Pultrusionsplankenhalbzeug 4 wegbewegt (siehe Figur 5).

In einem weiteren Schritt S5 befindet sich das Pultrusionsplankenhalbzeug 4 wieder in einem Vorschub. Das Schleifband 15 kann weiterhin in Rotation versetzt sein oder es wird bis zum nächsten Schleifvorgang angehalten. Die Schritte S4 und S5 können auch gleichzeitig begonnen werden und stattfinden.

Das Verfahren kann nun von vorne beginnen, wobei das Pultrusionsplankenhalbzeug 4 gemäß dem oben beschriebenen Schritt S1 gefördert wird, bis die gewünschte Position erreicht ist.

Wie insbesondere in Figur 5 gezeigt ist, sind mittels der Schleifvorrichtung 9 vorbestimmte Schäftungen 20 und 21 in Enden herzustellender Planken 19 eingebracht. Die erste Schäftung 20 entspricht dem ersten Konturabschnitt 13 und die zweite Schäftung 21 entspricht dem zweiten Konturabschnitt 14 der vorgegebenen Kontur 12 des Konturkörpers 11. Die erste Schäftung 20 ist an einem ersten Ende 22 der hergestellten Pultrusionsplanke 19 vorgesehen und die zweite Schäftung 21 ist an einem zweiten Ende 23 einer noch herzustellenden Pultrusionsplanke 19 vorgesehen, welches in dem in Figur 5 dargestellten Verfahrensschritt noch ein Ende des Pultrusionsplankenhalbzeugs 4 ist. Sobald das obige Verfahren wiederholt durchgeführt ist, ist dieses zweite Ende 23 ein Ende einer neu hergestellten, weiteren Pultrusionsplanke, so dass jede hergestellte Planke 19 an beiden gegenüberliegenden Enden 22, 23 die entsprechenden Schäftungen 20, 21 hat.

Mittels des beschriebenen Verfahrens und Systems 1 werden die eingangs genannten Vorteile und Funktionen erreicht. Insbesondere ist es möglich, Pultrusionsplanken 19 herzustellen, an deren gegenüberliegenden Ende 22 und 23 jeweils vorbestimmte Schäftungen 20 und 21 eingebracht sind. Dazu ist ein Konturkörper 11 mit vorgegebener Kontur 12 vorgesehen, um den das Schleifband 15 rotiert.

Wie eingangs beschrieben kann der Konturkörper 11 je nach Bedarf ausgetauscht werden, so dass andere Schäftungsgeometrien erreicht werden können.

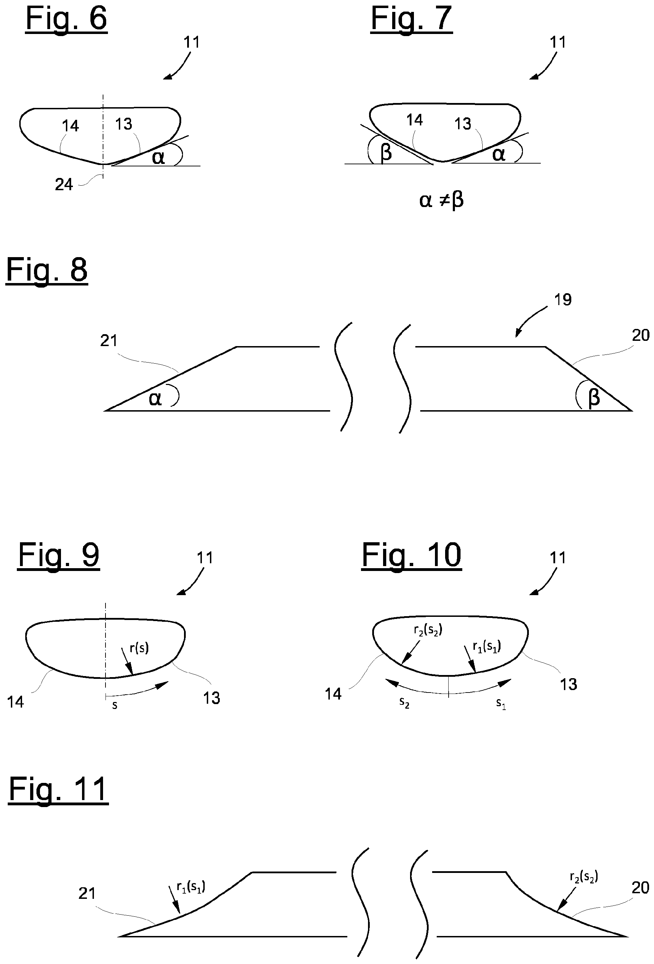

Der beschriebene Konturkörper 11 kann unterschiedliche Ausgestaltungen haben, insbesondere mit Hinblick auf die vorgegebene Kontur 12 und die dadurch erzeugten Schäftungen 22 und 23. Anhand der Figuren 6 bis 13 werden verschiedene Formen von Konturkörpern 11 und korrespondierende Schäftungen 20 und 21 beschrieben.

Figur 6 zeigt einen Konturkörper 11, welcher zumindest bezüglich der beiden Konturabschnitte 13 und 14 symmetrisch ausgebildet ist. Eine Symmetrieebene 24 verläuft normal zur Förderrichtung 3 und senkrecht zu der Förderebene 5.

Die Konturabschnitte 13 und 14 haben jeweils einen geraden Verlauf in der Art einer schiefen Ebene und bilden jeweils einen Winkel α bezogen auf die Förderebene 5 oder die Oberseite 7 des Pultrusionsplankenhalbzeugs 4 aus.

Mittels symmetrischer Ausgestaltung hat eine hergestellte Pultrusionsplanke 19 an beiden Enden gleiche Schäftungen, jedoch mit unterschiedlicher Ausrichtung.

Figur 7 zeigt einen Konturkörper 11, der nicht symmetrisch aufgebaut ist. Die beiden Konturabschnitte 13 und 14 verlaufen wiederum geradlinig, aber unter unterschiedlichen Winkeln α und β bezogen auf die Förderebene 5 oder die Oberseite 7 des Pultrusionsplankenhalbzeugs 4.

Bei asymmetrischer Ausgestaltung des Konturkörpers 11 hat eine hergestellte Pultrusionsplanke 19 an beiden Enden unterschiedliche Schäftungen, das heißt mit unterschiedlicher Ausrichtung und Verlauf, etwa Steigung.

Mittels eines solchen Konturkörpers 11 gemäß Figur 7 lässt sich eine in Figur 8 dargestellte, exemplarische Pultrusionsplanke 19 mit unterschiedlichen Schäftungen 20 und 21 herstellen.

Die Figuren 9 und 10 zeigen ähnlich zu den Figuren 6 und 7 einen symmetrischen und einen asymmetrischen Konturkörper 11, wobei im Unterschied die Konturabschnitte 13 und 14 keine geradlinigen Verläufe haben, sondern bogenförmig verlaufen. Die Konturen sind gekrümmt. Ein Radius r, r₁, r₂ der Konturabschnitte 13 und 14 verläuft jeweils in Abhängigkeit einer Schäftungslänge s, s₁, s₂. Er kann konstant oder variabel bezüglich der Schäftungslänge s, s₁, s₂ sein.

Mittels eines solchen Konturkörpers 11 gemäß Figur 10 lässt sich eine in Figur 11 dargestellte, exemplarische Pultrusionsplanke 19 mit unterschiedlichen Schäftungen 20 und 21 herstellen.

Weitere Beispiele eines symmetrischen und asymmetrischen Konturkörpers 11 zeigen Figuren 12 und 13, wobei jeder Konturabschnitt 13 und 14 einen Verlauf in Form eines liegenden "S" hat.

### Bezugszeichenliste

- 1: System
- 2: Förderstation
- 3: Förderrichtung
- 4: Pultrusionsplankenhalbzeug
- 5: Förderebene
- 6: Unterseite
- 7: Oberseite
- 8: Dicke
- 9: Schleifvorrichtung
- 10: Länge
- 11: Konturkörper
- 12: vorgegebene Kontur
- 13: erster Konturabschnitt
- 14: zweiter Konturabschnitt
- 15: Schleifband
- 16: Rotationsrichtung
- 17: Antriebsrolle
- 18: Verfahrrichtung
- 19: Pultrusionsplanke
- 20: erste Schäftung
- 21: zweite Schäftung
- 22: erstes Ende
- 23: zweites Ende
- 24: Symmetrieebene
- 30: Rolle
- 100: Windenergieanlage
- 101: Standvorrichtung
- 102: Gondel
- 103: Rotor
- 104: Rotorblatt
- 105: Rotornabe
- r: Radius
- s: Schäftungslänge
- S1 bis S5: Schritte

## Patentansprüche

1. System (1) zum Herstellen einer Pultrusionsplanke (19) für ein Rotorblatt (104) einer Windenergieanlage (100), das System (1) aufweisend:
- eine Förderstation (2) zum Fördern eines Pultrusionsplankenhalbzeugs (4) entlang einer Förderrichtung (3); und
- eine Schleifvorrichtung (9), die bezüglich der Förderrichtung (3) hinter der Förderstation (2) angeordnet ist; wobei
- die Schleifvorrichtung (9) einen Konturkörper (11) aufweist, der auf einer dem Pultrusionsplankenhalbzeug (4) zugeordneten Seite eine vorgegebene Kontur (12) aufweist, die an eine Schäftung (20, 21) eines Endes (22, 23) einer herzustellenden Pultrusionsplanke (19) angepasst ist; und
- die Schleifvorrichtung (9) ein rotierbares Schleifband (15) aufweist, welches zumindest entlang der vorgegebenen Kontur (12) um den Konturkörper (11) geführt ist; und
- zumindest der Konturkörper (11) mit dem Schleifband (15) entlang einer Verfahrrichtung (18) bewegbar ist, so dass abhängig von der vorgegebenen Kontur (12) Material des Pultrusionsplankenhalbzeugs (4) zum Herstellen der Schäftung (20, 21) abgetragen werden kann.

2. System (1) nach Anspruch 1,
wobei die vorgegebene Kontur (12) an eine erste Schäftung (20) eines ersten Endes (22) einer herzustellenden Pultrusionsplanke (19) und an eine zweite Schäftung (21) eines zweiten Endes (23) einer weiteren herzustellenden Pultrusionsplanke (19) angepasst ist.

3. System (1) nach Anspruch 2,
wobei die vorgegebene Kontur (12) des Konturkörpers (11) einen ersten Konturabschnitt (13), der zu der ersten Schäftung (20) korrespondiert, und einen zweiten Konturabschnitt (14) aufweist, der zu der zweiten Schäftung (21) korrespondiert.

4. System (1) nach Anspruch 3,
wobei der Konturkörper (11) so ausgebildet ist, dass, bezogen auf eine Symmetrieebene (24) normal zu der Förderrichtung (3), der erste Konturabschnitt (13) symmetrisch zu dem zweiten Konturabschnitt (14) verläuft.

5. System (1) nach Anspruch 3,
wobei der Konturkörper (11) so ausgebildet ist, dass der erste Konturabschnitt (13) asymmetrisch zu dem zweiten Konturabschnitt (14) verläuft.

6. System (1) nach einem der Ansprüche 2 bis 5,
wobei die erste und/oder die zweite Schäftung (20, 21) einen linearen und/oder geschwungenen Verlauf haben.

7. System (1) nach einem der vorherigen Ansprüche,
wobei die Schleifvorrichtung (9) derart eingerichtet ist, dass von dem Pultrusionsplankenhalbzeug (4) quer zu der Förderrichtung (3) eine herzustellende Pultrusionsplanke (19) abgetrennt werden kann.

8. System (1) nach einem der Ansprüche 1 bis 6,
wobei eine Schneidvorrichtung vorgesehen ist, die eine herzustellende Pultrusionsplanke (19) von dem Pultrusionsplankenhalbzeug (4) quer zu der Förderrichtung (3) abgetrennt.

9. System (1) nach einem der vorhergehenden Ansprüche,
wobei die Schleifvorrichtung (9) und/oder der Konturkörper (11) derart ausgebildet sind, dass der Konturkörper (11) auswechselbar ist.

10. System (1) nach einem der vorhergehenden Ansprüche,
wobei die Schleifvorrichtung (9) ein Konturkörpermagazin und eine Austauschvorrichtung aufweist, die den Konturkörper (11) durch einen weiteren Konturkörper (11) mit einer weiteren vorgegebenen Kontur aus dem Konturkörpermagazin ersetzt.

11. Verfahren zum Herstellen einer Pultrusionsplanke (19) für ein Rotorblatt (104) einer Windenergieanlage (100), mit den Schritten:
- Bereitstellen eines Pultrusionsplankenhalbzeugs (4) zur Bearbeitung durch eine Schleifvorrichtung (9),
- Rotieren eines Schleifbandes (15) der Schleifvorrichtung (9) entlang einer vorgegebenen Kontur (12), die an eine Schäftung (20, 21) eines Endes (22, 23) einer herzustellenden Pultrusionsplanke (19) angepasst ist,
- Bewegen des Schleifbandes (15) entlang einer Verfahrrichtung (18), und
- Abtragen von Material des Pultrusionsplankenhalbzeugs (4) mittels der Schleifvorrichtung (9) abhängig von der vorgegebenen Kontur (12) zum Herstellen der Schäftung (20, 21).

12. Verfahren nach Anspruch 11,
wobei das Schleifband (15) nur entlang der einen Verfahrrichtung (18) bewegbar ist.

13. Verfahren nach Anspruch 11 oder 12,
wobei vor, während oder nach dem Schritt des Abtragens eine herzustellende Pultrusionsplanke (19) von dem Pultrusionsplankenhalbzeug (4) abgelängt wird.

14. Verfahren nach einem der Ansprüche 12 oder 13,
wobei die Schleifvorrichtung (9) einen Konturkörper (11) mit der vorgegebenen Kontur (12) aufweist, um welchen zumindest entlang der vorgegebenen Kontur (12) das Schleifband (15) rotiert, wobei die vorgegebene Kontur (12) an eine erste Schäftung (20) eines ersten Endes (22) einer herzustellenden Pultrusionsplanke (19) und an eine zweite Schäftung (21) eines zweiten Endes (23) einer weiteren herzustellenden Pultrusionsplanke (19) angepasst ist, so dass im Schritt des Abtragens zwei Schäftungen (20, 21) herstellbar sind.

15. Schleifvorrichtung (9) für ein System (1) nach einem der Ansprüche 1 bis 10, aufweisend
- einen Konturkörper (11), der auf einer dem Pultrusionsplankenhalbzeug (4) zugeordneten Seite eine vorgegebene Kontur (12) aufweist, die an eine Schäftung (20, 21) eines Endes (22, 23) einer herzustellenden Pultrusionsplanke (19) angepasst ist; und
- ein rotierbares Schleifband (15), welches zumindest entlang der vorgegebenen Kontur (12) um den Konturkörper (11) geführt ist; wobei
- der Konturkörper (11) und das Schleifband (15) entlang einer Verfahrrichtung (18) bewegbar sind, so dass abhängig von der vorgegebenen Kontur (12) Material des Pultrusionsplankenhalbzeugs (4) zum Herstellen der Schäftung (20, 21) abgetragen werden kann.
